# EUROPEAN PATENT SPECIFICATION

(11) **EP 4 303 043 B1**
(45) Date of publication and mention of the grant of the patent: **01.10.2025**
(21) Application number: 22183934.3
(22) Date of filing: 08.07.2022
(51) Int. Cl.: B60H 1/00, B60K 11/02, B60K 1/00

(54) **HEAT EXCHANGE SYSTEM**
WÄRMEAUSTAUSCHSYSTEM
SYSTÈME D'ÉCHANGE DE CHALEUR

(43) Date of publication of application: 10.01.2024
(73) Proprietor: Volvo Car Corporation, 40531 Göteborg (SE)
(72) Inventor: GRAPE, Viktor, 40531 Göteborg (SE); OLSEN, Hans Erik, 40531 Göteborg (SE)
(74) Representative: Maiwald GmbH

(56) References cited:
- EP-B1- 1 404 537
- US-A1- 2015 308 719
- US-A1- 2021 188 043
- US-B2- 11 065 936

## Description

### TECHNICAL FIELD

The present invention relates to a heat exchange system for thermally conditioning a vehicle, a vehicle comprising such a heat exchange system, a method for thermally conditioning a vehicle and a computer program element for thermally conditioning a vehicle.

### BACKGROUND ART

Cabin air conditioning is one of important factors in view of energy efficiency for electric vehicles. Heat pump systems, which may be thermally coupled with a cabin air conditioning system, have been developed to use waste heat and increase the energy efficiency for a climate control of a cabin. As the energy efficiency of the electric vehicle increases, heat available in the ambient air increases in value. However, a feasibility of using ambient air below 0 °C as a heat source is significantly limited due to a risk of ice built up on heat exchangers of the vehicle. To avoid an ice formation or remove the ice, it may be necessary to detect and/or predict accurately, when ice is present.
Examples of such heat exchange system may be known from US 2021/188043 A1 and EP 1 404 537 B1.

### SUMMARY

Hence, there may be a need to provide an improved heat exchange system, which may allow utilizing ambient air more efficiently.

The problem is at least partially solved or alleviated by the subject matter of the independent claims of the present invention, wherein further examples are incorporated in the dependent claims. It should be noted that the aspects of the invention described in the following apply to the heat exchange system for thermally conditioning a vehicle, the vehicle comprising such a heat exchange system, the method for thermally conditioning a vehicle and the computer program element for thermally conditioning a vehicle.

According to the present disclosure, a heat exchange system is presented. The heat exchange system is adapted for thermally conditioning a vehicle and comprises a cooling system, an ambient heat exchanger unit, a capacitive sensor unit and a control unit. The cooling system is thermally couplable with a drivetrain system and/or an energy storage system of the vehicle. The ambient heat exchanger unit is thermally coupled with the cooling system. The ambient heat exchanger unit is configured to transfer heat between ambient air and the cooling system. The capacitive sensor unit is arranged at the ambient heat exchanger unit and configured to monitor a capacitance change of a surface of the ambient heat exchanger unit exposed to the ambient air. The control unit is configured to adjust the heat transfer between the ambient air and the cooling system, in case the capacitance change of the exchanger unit exceeds a pre-defined threshold for some of the conditioning that exchanger unit.

The heat exchange system may be adapted to be integrated in a vehicle utilizing heat transfer between the ambient air and inside the vehicle to improve a heat transfer efficiency. The heat exchange system may monitor a thermal state of the ambient heat exchanger unit accurately and thermally optimize an operation condition of the ambient heat exchanger unit if necessary. Since the cooling system may be coupled with the energy storage system, the drivetrain system and/or the ambient heat exchanger unit, a flexible and efficient use of heat sources can be achieved and an energy efficiency of the thermal management system can be improved.

The term "thermally conditioning" may be understood in an optimization of the operation condition by heating or cooling, which may be an operation temperature itself or a specific function depending on the operation temperature and/or the ambient temperature.

The cooling system may comprise one or more thermal control loops, through which a coolant medium may flow to transfer heat. The control loop may be thermally coupled with different components of the vehicle, for instance the energy storage system, the drivetrain system, etc. The energy storage system may be a battery system supplying electrical power to various subsystems of the vehicle to operate them. The drivetrain system may comprise an electric machine, power electronics such as inverters, direct current converters, charging electronics, and computing units or the like.

The ambient heat exchanger unit may comprise, for instance a radiator system, which may be also thermally coupled with the cooling system. Accordingly, the ambient heat exchanger unit may be configured for a coolant-to air heat exchange to allow the heat transfer between the ambient air and the coolant medium or cooling system.

Accordingly, the cooling system may be able to transfer excessive heat or waste heat from the energy storage system, the drivetrain system and/or the ambient heat exchanger unit using the coolant medium to any one of them to efficiently utilize heat or dissipate heat. To perform the heat transfer selectively or collectively among the cooling system, the energy storage system and the drivetrain system, the cooling system may comprise one or more valve elements directing the coolant medium through a specific thermal control loop(s).

The capacitive sensor unit may be arranged at the ambient heat exchanger unit, preferably at the surface of the ambient heat exchanger unit exposed to the ambient air. In other words, the capacitive sensor unit may be disposed at the opposite side of the cooling system relative to the ambient heat exchanger unit. Accordingly, the surface may be an outer surface of the ambient heat exchanger unit and act as a thermal interface between the ambient air and the coolant medium and/or the cooling system.

The capacitive sensor unit may be adapted to apply a capacitive sensing technology based on a change in the electrical capacitance of the capacitor system. Capacitive sensing is a low-power, low-cost, high-resolution contactless sensing technology. The capacitive sensor unit may comprise electrodes, one of which may be a surface to be measured and form an electrical capacitor. The capacitance change may be caused by a displacement or deformation of the surface to be measured, an electrically conductive material or a dielectric brought into a vicinity, a provision of a variable capacitor, etc. As such physical character of the surface changes, the capacitance change may be also occurred.

Accordingly, the capacitive sensor unit arranged at the outer surface of the ambient heat exchanger unit may monitor the capacitance change of the surface of the ambient heat exchanger unit. Conventionally, the outer surface of the ambient heat exchanger unit may comprise metallic material such as aluminum, which may be suitable as an electrical capacitor. Hence, the capacitance change may represent an abnormal operation situation of the ambient heat exchanger unit influenced by the ambient air.

The control unit may be an electronic control unit (ECU) of the heat exchange system and configured to receive sensor data generated by the capacitive sensor unit. The control unit may be further able to analyze the sensor data, particularly capacitance change data of the surface of the ambient heat exchanger unit exposed to the ambient air. The control unit may be, hence, configured to compare the received capacity change data with the pre-defined threshold, which may an upper limit or a lower limit of the capacitance change. The pre-defined threshold may be determined at a desired operation temperature of the ambient heat exchanger unit and/or based on a manufacturing specification.

Additionally, the control unit may be able to interchange thermal information with other subsystems of the vehicle such as temperature sensor unit in order to ensure that the capacitance change may be caused due to a current ambient thermal situation, e.g. weather.

If the capacitance change measured by the capacitive sensor unit increases or decreases beyond the pre-defined threshold, the control unit may be capable to adjust the heat transfer from the ambient air to the cooling system or from the cooling system to the ambient air to thermally optimize the operation condition of the ambient heat exchanger unit.

For instance, the capacitance change indicates that the ambient heat exchanger unit, particularly, the outer surface of the ambient heat exchanger unit needs to be cooled or heated to improve the heat transfer efficiency of the ambient heat exchanger unit, the control unit may be able to utilize collectively and/or selectively the heat source from at least one of the cooling system, the energy storage system and the drivetrain system. Accordingly, an efficient thermal management of the vehicle may be achieved.

In an example, the capacitive sensor unit comprises at least one capacitive sensing element configured to measure a change of a dielectric constant of the ambient heat exchanger unit exposed to the ambient air. The capacitance change of the ambient heat exchanger unit, particularly at the surface exposed to the ambient air may be influenced by a permittivity, in other words dielectric constant of a dielectric, such as ambient air. The capacitive sensing element may be able to measure the capacitance change at the outer surface of the ambient heat exchanger unit, which may be proportional to a change of the dielectric constant and/or inversely proportional to a distance between the electrodes of the capacitive sensor unit.

Hence, in case the capacitance change increases beyond the pre-defined threshold, the control unit may regard that the heat transfer via the ambient heat exchanger unit can be limited and/or disturbed, since the outer surface of the ambient heat exchanger unit may not be thermally blocked. Accordingly, the control unit may trigger the heat transfer between the ambient heat exchanger unit and the cooling system for thermally conditioning the surface and/or the ambient heat exchanger unit.

**In** an example, the capacitive sensing element comprises a capacitance-to-digital converter element. The capacitive sensor unit may comprise a high-resolution, electromagnetic interface resistant, high-speed capacitive sensing element. Particularly, the capacitance-to-digital converter may be configured to convert the detected capacitance to a digital code, which may allow a high flexibility with respect to power consumption, resolution, speed, etc.

In an example, the cooling system is thermally couplable with a cabin air conditioning system of the vehicle. The control unit is configured to adjust the heat transfer between the ambient air and the cooling system by utilizing transfer between the cooling system and the cabin air conditioning system, in case the capacitance change of the ambient heat exchanger unit exceeds the pre-defined threshold for conditioning the ambient heat exchanger unit.

The cabin air conditioning system may be a part of a refrigerant system of the vehicle. The cabin air conditioning system may be configured to cool or heat a vehicle cabin. The cabin air conditioning system may be thermally coupled with the cooling system. Accordingly, the coolant medium circulating in the coolant system may transfer heat from or to the cabin air conditioning system to properly utilize the heat source in the vehicle. Particularly, since the cooling system may be coupled with the energy storage system, the drivetrain system and/or the ambient heat exchanger unit, the cabin air conditioning system may be also thermally coupled with these subsystems of the vehicle and utilize a separate or collective heat source to optimize a thermal management of the cabin air conditioning system, and vice versa.

Hence, the control unit may be able to utilize heat transfer between the cooling system and the cabin air conditioning system, in case the ambient heat exchanger unit needs to be thermally conditioned based on the capacitance change measured at the surface of the ambient heat exchanger unit exposed to the ambient air. For instance, if the capacitance change indicates that the ambient heat exchanger unit, particularly, the outer surface of the ambient heat exchanger unit needs to be cooled or heated to improve the heat transfer efficiency of the ambient heat exchanger unit, the control unit may be able to utilize collectively and/or selectively the heat source from at least one of the cooling system, the energy storage system, the drivetrain system and the cabin air conditioning system. Accordingly, an efficient thermal management of the vehicle may be achieved.

In an example, the capacitive sensor unit is configured to detect an ice layer built on the surface of the ambient heat exchanger unit exposed to the ambient air based on the capacitance change. The control unit is configured to adjust the heat transfer between the ambient heat exchanger unit and cooling system to de-ice the ambient heat exchanger unit.

The capacitive sensing element of the capacitive sensor unit may be able to measure different dielectric constants of the surface of the ambient heat exchanger unit exposed to the ambient air. For instance, if the vehicle is frosted or the ambient temperature is below 0°C, an ice layer may be formed onto the outer surface of the ambient heat exchanger unit exposed to the ambient air. Such ice layer may prevent from an efficient heat transfer between the ambient air and the ambient heat exchanger unit, thus the cooling system.

The capacitive sensing element may measure the change of the dielectric constant at the ambient heat exchanger unit and the control unit may identify a presence of the ice layer based on the capacitance changes caused by the change of the dielectric constant. As soon as the present of the ice layer is identified, the control unit may initiate to heat the ambient heat exchanger unit by adjusting the heat transfer from the cooling system and/or the cabin air conditioning system to de-ice the surface of the ambient heat exchanger unit.

In other words, the control unit may be capable to control the valve elements of the cooling system and/or the valve elements cabin air conditioning system to direct the coolant medium to heat the ambient heat exchanger unit. Still in other words, the heat exchange system may apply a heat pump to thaw the ambient heat exchanger unit. Accordingly, the ambient heat exchanger unit may be thermally conditioned by utilizing the excessive heat or waste heat from the cooling system and/or the cabin air conditioning system in an energy-efficient way and the heat transfer efficiency of the ambient heat exchanger unit may not be diminished.

In an example, the ambient heat exchanger unit comprises a plurality of fins arranged by rows and/or plurality of tubes. The surface of the ambient heat exchanger unit exposed to the ambient air for the heat transfer between the ambient air and the ambient heat exchanger unit may comprise various shape. To maximize the efficient heat transfer, the ambient heat exchanger unit may comprise the plurality of fins and/or the plurality of tubes, which may be thermally coupled with the coolant medium, thus the cooling system on one side and exposed to the ambient air on the other side.

The plurality of fins may be arranged in the ambient heat exchanger unit by rows. Alternatively the plurality of fins may be arranged in the ambient heat exchanger unit by columns. The plurality of tubes may be also arranged in the ambient heat exchanger unit by rows or by columns. Further, the plurality of fins and the plurality of tubes may be arranged alternately by rows or by columns.

In an example, the capacitive sensor unit is arranged between two rows of the fins. In an example, the capacitive sensor unit is arranged above a top row of the fins. Alternatively, the capacitive sensor unit may be arranged at a bottom row of the fins. In an example, the capacitive sensor unit is arranged between the tubes.

However, the position of the capacitive sensor unit may not physically affect a potential of the ice layer forming. The ice may also start forming on different places on the heat exchanger due to the heat exchanger design and the position may be chosen to measure where the ice layer starts to form earliest. Position may also be chosen based on air flow through the heat exchanger that is a dependent on vehicle design, heat exchanger position and other design parameters.

To ensure a reliable measurement of the capacitance change of the ambient heat exchanger unit, the capacitive sensor unit may be directly arranged at the thermal interface of the ambient heat exchanger unit, which may be the plurality of fins and/or the plurality of tubes. Accordingly, one or more capacitive sensing elements of the capacitive sensor unit may be arranged between two rows of the fins or tubes. Further, capacitive sensor unit may be arranged at a top and/or bottom portion of the ambient heat exchanger unit. Accordingly, a direct monitoring of the change of the thermal condition of the ambient heat exchanger unit at the outer surface, for instance the presence of the ice layer formed on the outer surface, may be achieved and a prompt thermal conditioning of the ambient heat exchanger unit can be ensured.

In an example, the control unit is further configured to predict a size of the ice layer built on the surface of the ambient heat exchanger unit based on the capacitance change and empirical data about an ice layer formation. The capacitive sensor unit may not be necessarily cover the entire area of the outer surface of the ambient heat exchanger unit to monitor the ice layer formation. The control unit may be able to predict the size of ice layer formed on the surface of the ambient heat exchanger unit exposed to the ambient air based on the empirical data.

The empirical data may comprise, for instance, a thickness or an area of the ice layer, which may be measured or determined empirically over time. The control unit may be able to access such empirical data, which may be stored, for instance in a storage medium. Hence, if the control unit detects the capacitance changes, the control unit may be also capable to assess the size of the ice layer based on the empirical data. Accordingly, the control unit may be able to adjust the heat transfer between the ambient air and the cooling system with respect to the determined size of the ice layer.

According to the present disclosure, a vehicle is presented. The vehicle comprises a heat exchange system as described above. The vehicle may be a battery electric vehicle or a hybrid electric vehicle. The vehicle comprising the heat exchange system according to the present disclosure may facilitate a thermal conditioning an ambient heat exchanger unit not based on a prediction but real-time measurement of a capacitance change of an outer surface of the ambient heat exchanger unit exposed to the ambient air.

In an example, the vehicle further comprises a heat pump system configured to transfer heat between a cooling system and a cabin air conditioning system. The heat pump system may comprise at least a cooling system and a cabin air conditioning system to selectively or collectively utilize waste heat produced in the vehicle. Accordingly, the thermal conditioning of the ambient heat exchanger unit may utilize the waste heat from the vehicle for the thermal conditioning of the cabin air conditioning system.

In particular, in case of an ice formation on the surface of the ambient heat exchanger unit exposed to the ambient air, the control unit may detect immediately based on the capacitance change of the surface and initiate to heat transfer from the cooling system and/or the cabin air conditioning system to de-ice the ice layer formed on the surface. Accordingly, flexible and efficient use of heat sources can be achieved and an energy efficiency of the thermal management system can be improved.

According to the present disclosure, a method for thermally conditioning a vehicle is presented. The method comprises
- monitoring a capacitance change of a surface of an ambient heat exchanger unit exposed to ambient air by a capacitive sensor unit, and
- adjusting heat transfer between ambient air and a cooling system, in case the capacitance change of the ambient heat exchanger unit exceeds a pre-defined threshold for thermally conditioning the ambient heat exchanger unit.
The ambient heat exchanger unit is configured to transfer heat between the ambient air and the cooling system. The cooling system is thermally couplable with a drivetrain system and/or an energy storage system of the vehicle. The ambient heat exchanger unit is thermally coupled with the cooling system. The capacitive sensor unit is arranged at the exchanger unit.

According to the present disclosure, a computer program element for thermally conditioning a vehicle is presented. The computer program element is adapted to perform the method steps as described above, when being executed by a processing element.

According to the present disclosure, one or more computer storage media may be presented. The computer storage media is encoded with instructions, that when executed by a computer, cause the computer to perform the operations of the respective method as described above.

The storage media may comprise internal to a computing device, such as a computer's SSD, or a removable device such as an external HDD or universal serial bus (USB) flash drive. There are also other types of storage media, including magnetic tape, compact discs (CDs) and non-volatile memory (NVM) cards.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically and exemplarily an example of a vehicle comprising a heat exchange system according to the present disclosure.
- Fig. 2a, 2b, 2c: show schematically and exemplarily examples of a heat exchange system according to the present disclosure.

### DESCRIPTION OF EXAMPLES

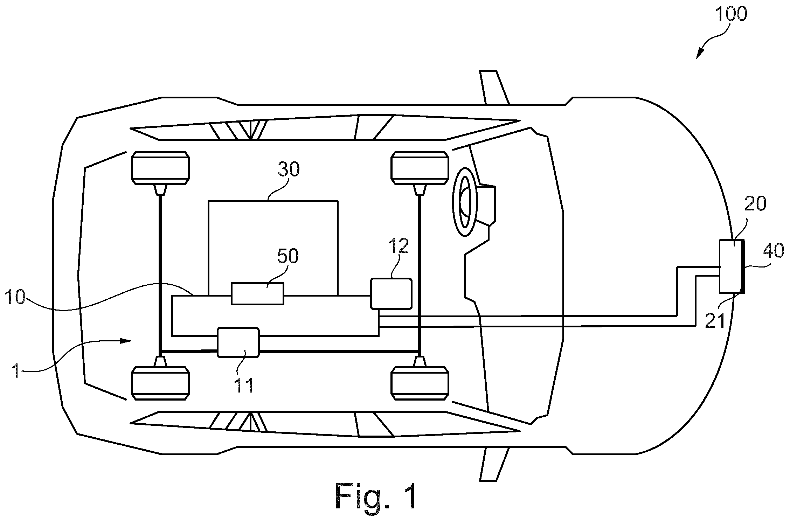

Fig. 1 shows a vehicle 100, which may be a battery electric vehicle or a hybrid electric vehicle. The vehicle 100 comprises a heat exchange system 1 configured for thermally conditioning the vehicle 100.

The heat exchange system 1 comprises a cooling system 10, an ambient heat exchanger unit 20 and a cabin air conditioning system 30. The heat exchange system 1 may be a part of a heat pump system of the vehicle 100, which utilizes a heat source such as waste heat collectively and/or selectively from at least one of the cooling system 10, the ambient heat exchanger unit 20 and the cabin air conditioning system 30.

The ambient heat exchanger unit 20 is thermally coupled with the cooling system 10. The ambient heat exchanger unit 20 is configured to transfer heat between ambient air and the cooling system 10.

The cooling system 10 is thermally couplable with a drivetrain system 11 and/or an energy storage system 12 of the vehicle 100. The cooling system 10 is also thermally couplable with the cabin air conditioning system 30 of the vehicle 100.

The heat exchange system 1 further comprises a capacitive sensor unit 40 configured to monitor a capacitance change of a surface 21 of the ambient heat exchanger unit 20 exposed to the ambient air. The capacitive sensor unit 40 comprises at least one capacitive sensing element configured to measure a change of a dielectric constant of the ambient heat exchanger unit 20 exposed to the ambient air. The capacitive sensing element comprises a capacitance-to-digital converter element allowing a high flexibility with respect to power consumption, resolution, speed, etc.

The ambient heat exchanger unit 20 comprises a plurality of fins 22 arranged by rows and/or plurality of tubes 23 to maximize the efficient heat transfer between the ambient heat exchanger unit 20 and the ambient air. Each row of fins and each tube are alternately arranged at the surface 21 of the ambient heat exchanger unit 20 exposed to the ambient air. However, the arrangement of the plurality of fins 22 and the tubes 23 does not limited thereto.

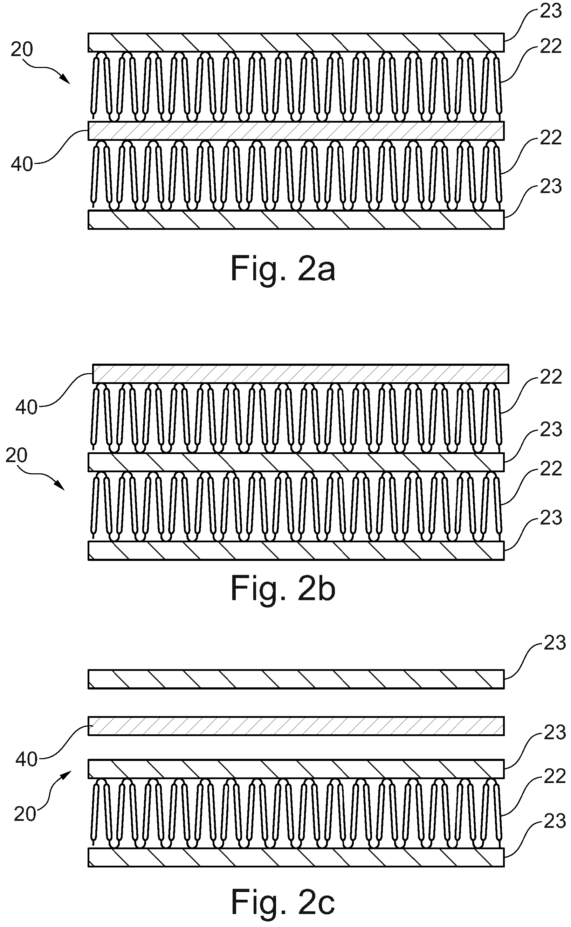

As shown in Fig. 2a, the plurality of fins 22 can be arranged by rows and the capacitive sensor unit 40 can be arranged between two rows of the fins 22. As shown in Fig. 2b, the plurality of fins 22 can be arranged by rows and the capacitive sensor unit 40 can be arranged at a top row of the fins 22. As shown in Fig. 2c, the plurality of fins 22 and the plurality of tubes 23 can be arranged by rows and the capacitive sensor unit 40 can be arranged between the tubes 23.

The heat exchange system 1 further comprises a control unit 50 configured to adjust the heat transfer between the ambient air and the cooling system 10 by utilizing transfer between the cooling system 10 and the cabin air conditioning system 30, in case the capacitance change of the ambient heat exchanger unit 20 exceeds the pre-defined threshold for conditioning the ambient heat exchanger unit 20.

**In** particular, the capacitive sensor unit 40 is configured to detect ice built on the surface 21 of the ambient heat exchanger unit 20 exposed to the ambient air based on the capacitance change. The control unit 50 is configured to adjust the heat transfer between the ambient heat exchanger unit 20 and cooling system 10 to de-ice the ambient heat exchanger unit 20.

The capacitive sensing element may measure the change of the dielectric constant at the ambient heat exchanger unit 20 and the control unit 50 can identify a presence of the ice layer based on the capacitance changes caused by the change of the dielectric constant. As soon as the present of the ice layer is identified, the control unit 50 may initiate to heat the ambient heat exchanger unit 20 by adjusting the heat transfer from the cooling system 10 and/or the cabin air conditioning system 30 to de-ice the surface 21 of the ambient heat exchanger unit 20.

Accordingly, the ambient heat exchanger unit 20 may be thermally conditioned by utilizing the excessive heat or waste heat from the cooling system 10 and/or the cabin air conditioning system 30 in an energy-efficient way and the heat transfer efficiency of the ambient heat exchanger unit 20 may be maintained or even increased.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and description, such illustration and description are to be considered illustrative or exemplary and not restrictive. The invention is not limited to the disclosed examples. Other variations to the disclosed examples can be understood and effected by those skilled in the art in practicing the claimed invention, from a study of the drawings, the description, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A heat exchange system (1) for thermally conditioning a vehicle (100), comprising:
- a cooling system (10),
- an ambient heat exchanger unit (20),
- a capacitive sensor unit (40), and
- a control unit (50),
the cooling system (10) being thermally couplable with a drivetrain system (11) and/or an energy storage system (12) of the vehicle (100),
the ambient heat exchanger unit (20) being thermally coupled with the cooling system (10),
the ambient heat exchanger unit (20) being configured to transfer heat between ambient air and the cooling system (10),
the cooling system (10) being thermally couplable with a cabin air conditioning system (30) of the vehicle (100),
the capacitive sensor unit (40) being arranged at the ambient heat exchanger unit (20) and configured to monitor a capacitance change of a surface (21) of the ambient heat exchanger unit (20) exposed to the ambient air, and
the control unit (50) being configured to adjust the heat transfer between the ambient air and the cooling system (10) by utilizing heat transfer between the cooling system (10) and the cabin air conditioning system (30), in case the capacitance change of the ambient heat exchanger unit (20) exceeds a pre-defined threshold for thermally conditioning the ambient heat exchanger unit (20).

2. The heat exchange system (1) according to claim 1, the capacitive sensor unit (40) comprising at least one capacitive sensing element configured to measure a change of a dielectric constant of the ambient heat exchanger unit (20) exposed to the ambient air.

3. The heat exchange system (1) according to the preceding claim, the capacitive sensing element comprising a capacitance-to-digital converter element.

4. The heat exchange system (1) according to any of the preceding claims, the capacitive sensor unit (40) being configured to detect an ice layer built on the surface (21) of the ambient heat exchanger unit (20) exposed to the ambient air based on the capacitance change, and
the control unit (50) being configured to adjust the heat transfer between the ambient heat exchanger unit (20) and the cooling system (10) to de-ice the ambient heat exchanger unit (20).

5. The heat exchange system (1) according to any of the preceding claims, the ambient heat exchanger unit (20) comprising a plurality of fins (22) arranged by rows and/or a plurality of tubes (23).

6. The heat exchange system (1) according to the preceding claim, the capacitive sensor unit (40) being arranged between two rows of the fins (23).

7. The heat exchange system (1) according to claim 5, the capacitive sensor unit (40) being arranged above a top row of the fins (22).

8. The heat exchange system (1) according to claim 5, the capacitive sensor unit (40) being arranged between two tubes (23).

9. The heat exchange system (1) according to any of the preceding claims, the control unit (50) being further configured to predict a size of the ice layer built on the surface (21) of the ambient heat exchanger unit (20) based on the capacitance change and empirical data about the ice layer formation.

10. A vehicle (100) comprising a heat exchange system (1) according to any of the preceding claims 1 to 9.

11. The vehicle (100) according to claim 10, the vehicle (100) further comprising a heat pump system configured to transfer heat between a cooling system (10) and a cabin air conditioning system (30).

12. A method for thermally conditioning a vehicle (100), comprising:
- monitoring a capacitance change of a surface (21) of an ambient heat exchanger unit (20) exposed to ambient air by a capacitive sensor unit (40), and
- adjusting heat transfer between ambient air and a cooling system (10) by utilizing heat transfer between the cooling system (10) and a cabin air conditioning system (30), in case the capacitance change of the ambient heat exchanger unit (20) exceeds a pre-defined threshold for thermally conditioning the ambient heat exchanger unit (20),
the ambient heat exchanger unit (20) being configured to transfer heat between the ambient air and the cooling system (10),
the cooling system (10) being thermally couplable with a drivetrain system (21) and/or an energy storage system (22) of the vehicle (100),
the ambient heat exchanger unit (20) being thermally coupled with the cooling system (10),
the cooling system (10) being thermally couplable with the cabin air conditioning system (30) of the vehicle (100), and
the capacitive sensor unit (40) being arranged at the ambient heat exchanger unit (20).

13. A computer program element for thermally conditioning a vehicle (100) according to claims 10 or 11, which when being executed by a processing element, being adapted to perform the method steps of a method claim according to claim 12.

## Patentansprüche

1. Wärmeaustauschsystem (1) zur thermischen Konditionierung eines Fahrzeugs (100), umfassend:
- ein Kühlsystem (10),
- eine Umgebungswärmetauscher-Einheit (20),
- eine kapazitive Sensoreinheit (40) und
- eine Steuereinheit (50),
wobei das Kühlsystem (10) thermisch mit einem Antriebsstrangsystem (11) und/oder einem Energiespeichersystem (12) des Fahrzeugs (100) koppelbar ist, wobei die Umgebungswärmetauscher-Einheit (20) thermisch mit dem Kühlsystem (10) gekoppelt ist, wobei die Umgebungswärmetauscher-Einheit (20) dazu konfiguriert ist, Wärme zwischen Umgebungsluft und dem Kühlsystem (10) zu übertragen, wobei das Kühlsystem (10) thermisch mit einer Fahrgastraum-Klimaanlage (30) des Fahrzeugs (100) koppelbar ist, wobei die kapazitive Sensoreinheit (40) an der Umgebungswärmetauscher-Einheit (20) angeordnet ist und dazu konfiguriert ist, eine Kapazitätsänderung einer Oberfläche (21) der Umgebungswärmetauscher-Einheit (20), die der Umgebungsluft ausgesetzt ist, zu überwachen, und wobei die Steuereinheit (50) dazu konfiguriert ist, den Wärmetransfer zwischen der Umgebungsluft und dem Kühlsystem (10) durch Nutzung des Wärmetransfers zwischen dem Kühlsystem (10) und der Fahrgastraum-Klimaanlage (30) anzupassen, falls die Kapazitätsänderung der Umgebungswärmetauscher-Einheit (20) einen vordefinierten Schwellenwert zur thermischen Konditionierung der Umgebungswärmetauscher-Einheit (20) überschreitet.

2. Wärmeaustauschsystem (1) nach Anspruch 1, wobei die kapazitive Sensoreinheit (40) mindestens ein kapazitives Sensorelement umfasst, das dazu konfiguriert ist, eine Änderung der Dielektrizitätskonstanten der Umgebungsluft-Wärmetauscher-Einheit (20), die der Umgebungsluft ausgesetzt ist, zu messen.

3. Wärmeaustauschsystem (1) nach dem vorhergehenden Anspruch, wobei das kapazitive Sensorelement ein Kapazitäts-zu-Digital-Wandler-Element umfasst.

4. Wärmeaustauschsystem (1) nach einem der vorhergehenden Ansprüche, wobei die kapazitive Sensoreinheit (40) dazu konfiguriert ist, eine auf der Oberfläche (21) der Umgebungsluft-Wärmetauscher-Einheit (20), die der Umgebungsluft ausgesetzt ist, gebildete Eisschicht anhand der Kapazitätsänderung zu detektieren, und wobei die Steuereinheit (50) dazu konfiguriert ist, den Wärmetransfer zwischen der Umgebungsluft-Wärmetauscher-Einheit (20) und dem Kühlsystem (10) anzupassen, um die Umgebungsluft-Wärmetauscher-Einheit (20) abzutauen.

5. Wärmeaustauschsystem (1) nach einem der vorhergehenden Ansprüche, wobei die Umgebungsluft-Wärmetauscher-Einheit (20) eine Vielzahl von Lamellen (22), die in Reihen angeordnet sind, und/oder eine Vielzahl von Rohren (23) umfasst.

6. Wärmeaustauschsystem (1) nach dem vorhergehenden Anspruch, wobei die kapazitive Sensoreinheit (40) zwischen zwei Reihen der Lamellen (22) angeordnet ist.

7. Wärmeaustauschsystem (1) nach Anspruch 5, wobei die kapazitive Sensoreinheit (40) oberhalb einer oberen Reihe der Lamellen (22) angeordnet ist.

8. Wärmeaustauschsystem (1) nach Anspruch 5, wobei die kapazitive Sensoreinheit (40) zwischen zwei Rohren (23) angeordnet ist.

9. Wärmeaustauschsystem (1) nach einem der vorhergehenden Ansprüche, wobei die Steuereinheit (50) ferner dazu konfiguriert ist, die Größe der auf der Oberfläche (21) der Umgebungsluft-Wärmetauscher-Einheit (20) gebildeten Eisschicht basierend auf der Kapazitätsänderung und empirischen Daten zur Eisschichtbildung vorherzusagen.

10. Fahrzeug (100), umfassend ein Wärmeaustauschsystem (1) nach einem der Ansprüche 1 bis 9.

11. Fahrzeug (100) nach Anspruch 10, wobei das Fahrzeug (100) ferner ein Wärmepumpensystem umfasst, das dazu konfiguriert ist, Wärme zwischen einem Kühlsystem (10) und einer Fahrgastraum-Klimaanlage (30) zu übertragen.

12. Verfahren zur thermischen Konditionierung eines Fahrzeugs (100), umfassend:
- Überwachen einer Kapazitätsänderung einer Oberfläche (21) einer Umgebungsluft-Wärmetauscher-Einheit (20), die der Umgebungsluft ausgesetzt ist, mittels einer kapazitiven Sensoreinheit (40), und
- Anpassen des Wärmetransfers zwischen der Umgebungsluft und einem Kühlsystem (10) durch Nutzung des Wärmetransfers zwischen dem Kühlsystem (10) und einer Fahrgastraum-Klimaanlage (30), falls die Kapazitätsänderung der Umgebungsluft-Wärmetauscher-Einheit (20) einen vordefinierten Schwellenwert zur thermischen Konditionierung der Umgebungsluft-Wärmetauscher-Einheit (20) überschreitet, wobei die Umgebungsluft-Wärmetauscher-Einheit (20) dazu konfiguriert ist, Wärme zwischen der Umgebungsluft und dem Kühlsystem (10) zu übertragen, wobei das Kühlsystem (10) thermisch mit einem Antriebsstrangsystem (21) und/oder einem Energiespeichersystem (22) des Fahrzeugs (100) koppelbar ist, wobei die Umgebungsluft-Wärmetauscher-Einheit (20) thermisch mit dem Kühlsystem (10) gekoppelt ist, wobei das Kühlsystem (10) thermisch mit der Fahrgastraum-Klimaanlage (30) des Fahrzeugs (100) koppelbar ist, und wobei die kapazitive Sensoreinheit (40) an der Umgebungsluft-Wärmetauscher-Einheit (20) angeordnet ist.

13. Computerprogrammelement zur thermischen Konditionierung eines Fahrzeugs (100) nach Anspruch 10 oder 11, das, wenn es von einer Verarbeitungseinheit ausgeführt wird, dazu eingerichtet ist, die Verfahrensschritte eines Verfahrensanspruchs gemäß Anspruch 12 auszuführen.

## Revendications

1. Système d'échange de chaleur (1) pour le conditionnement thermique d'un véhicule (100), comprenant :
- un système de refroidissement (10),
- une unité d'échange de chaleur ambiante (20),
- une unité de capteur capacitif (40), et
- une unité de commande (50),
le système de refroidissement (10) pouvant être couplé thermiquement à un système de chaîne cinématique (11) et/ou à un système de stockage d'énergie (12) du véhicule (100),
l'unité d'échange de chaleur ambiante (20) étant couplée thermiquement au système de refroidissement (10),
l'unité d'échange de chaleur ambiante (20) étant conçue pour transférer la chaleur entre l'air ambiant et le système de refroidissement (10),
le système de refroidissement (10) pouvant être couplé thermiquement à un système de climatisation d'habitacle (30) du véhicule (100),
l'unité de capteur capacitif (40) étant disposée au niveau de l'unité d'échange de chaleur ambiante (20) et conçue pour surveiller une modification de capacité d'une surface (21) de l'unité d'échange de chaleur ambiante (20) exposée à l'air ambiant, et
l'unité de commande (50) étant conçue pour ajuster le transfert de chaleur entre l'air ambiant et le système de refroidissement (10) en utilisant le transfert de chaleur entre le système de refroidissement (10) et le système de climatisation d'habitacle (30), dans le cas où le changement de capacité de l'unité d'échange de chaleur ambiante (20) dépasse un seuil prédéfini pour le conditionnement thermique de l'unité d'échange de chaleur ambiante (20).

2. Système d'échange de chaleur (1) selon la revendication 1, l'unité de capteur capacitif (40) comprenant au moins un élément de détection capacitif conçu pour mesurer une modification de constante diélectrique de l'unité d'échange de chaleur ambiante (20) exposée à l'air ambiant.

3. Système d'échange de chaleur (1) selon la revendication précédente, l'élément de détection capacitif comprenant un élément de conversion capacité-numérique.

4. Système d'échange de chaleur (1) selon l'une quelconque des revendications précédentes, l'unité de capteur capacitif (40) étant conçue pour détecter une couche de glace formée sur la surface (21) de l'unité d'échange de chaleur ambiante (20) exposée à l'air ambiant sur la base de la variation de capacité, et
l'unité de commande (50) étant conçue pour ajuster le transfert de chaleur entre l'unité d'échange de chaleur ambiante (20) et le système de refroidissement (10) pour dégivrer l'unité d'échange de chaleur ambiante (20).

5. Système d'échange de chaleur (1) selon l'une quelconque des revendications précédentes, l'unité d'échange de chaleur ambiante (20) comprenant une pluralité d'ailettes (22) disposées par rangées et/ou une pluralité de tubes (23).

6. Système d'échange de chaleur (1) selon la revendication précédente, l'unité de capteur capacitif (40) étant disposée entre deux rangées des ailettes (23).

7. Système d'échange de chaleur (1) selon la revendication 5, l'unité de capteur capacitif (40) étant disposée au-dessus d'une rangée supérieure des ailettes (22).

8. Système d'échange de chaleur (1) selon la revendication 5, l'unité de capteur capacitif (40) étant disposée entre deux tubes (23).

9. Système d'échange de chaleur (1) selon l'une quelconque des revendications précédentes, l'unité de commande (50) étant en outre conçue pour prédire la taille de la couche de glace formée sur la surface (21) de l'unité d'échange de chaleur ambiante (20) sur la base de la variation de capacité et de données empiriques sur la formation de la couche de glace.

10. Véhicule (100) comprenant un système d'échange de chaleur (1) selon l'une quelconque des revendications précédentes 1 à 9.

11. Véhicule (100) selon la revendication 10, le véhicule (100) comprenant en outre un système de pompe à chaleur conçu pour transférer la chaleur entre un système de refroidissement (10) et un système de climatisation d'habitacle (30).

12. Procédé de conditionnement thermique d'un véhicule (100), comprenant :
- la surveillance d'une variation de capacité d'une surface (21) d'une unité d'échange de chaleur ambiante (20) exposée à l'air ambiant par une unité de capteur capacitif (40), et
- l'ajustement du transfert de chaleur entre l'air ambiant et un système de refroidissement (10) en utilisant le transfert de chaleur entre le système de refroidissement (10) et un système de climatisation d'habitacle (30), dans le cas où la variation de capacité de l'unité d'échange de chaleur ambiante (20) dépasse un seuil prédéfini pour conditionner thermiquement l'unité d'échange de chaleur ambiante (20),
l'unité d'échange de chaleur ambiante (20) étant conçue pour transférer la chaleur entre l'air ambiant et le système de refroidissement (10),
le système de refroidissement (10) pouvant être couplé thermiquement à un système de chaîne cinématique (21) et/ou à un système de stockage d'énergie (22) du véhicule (100),
l'unité d'échange de chaleur ambiante (20) pouvant être couplée thermiquement au système de refroidissement (10),
le système de refroidissement (10) étant couplé thermiquement au système de climatisation d'habitacle (30) du véhicule (100), et
l'unité de capteur capacitif (40) étant disposée sur l'unité d'échange de chaleur ambiante (20).

13. Élément de programme informatique pour le conditionnement thermique d'un véhicule (100) selon les revendications 10 ou 11, qui, lorsqu'il est exécuté par un élément de traitement, est conçu pour effectuer les étapes de procédé du procédé selon la revendication 12.
